# EUROPEAN PATENT APPLICATION

(11) **EP 1 787 890 A1**
(43) Date of publication of application: **23.05.2007**
(21) Application number: 05425822.3
(22) Date of filing: 21.11.2005
(51) Int. Cl.: B62D 3/12, F16H 55/28

(54) **Steering unit**

(71) Applicant: TRW ITALIA S.p.A., 25063 Gardone Valtrompia (Brescia) (IT)
(72) Inventor: Tabaglio, Luca, 25135 Brescia (IT); Lucchi, Marco, 25062 Concesio (BS) (IT)
(74) Representative: Crippa, Paolo Ernesto

(57) **Abstract**

The object of the present invention is a steering unit for a motor vehicle, comprising a steering box (2), a rack (4), a pinion and support means, suitable for being seated into said steering box (2) for slidingly supporting said rack. Said support means comprise a bush (10), an enclosure (30) and a spring (50) placed in compression between enclosure and bush for influencing said bush (10) and pushing it towards said rack (4).

## Description

. The object of the present invention is a steering unit for a vehicle, comprising support means of a rack of said steering unit.

. Generally, a steering unit comprises a steering box, a rack, seated into said steering box, a pinion, engaged with the rack and at least partly protruding from the steering box, and at least one support element seated into said steering box, supporting the rack.

. The steering unit is associated to a steering column, connected to the steering wheel of the vehicle; in particular, said steering column is engaged with the pinion. The steering unit, moreover, is associated to steering axle shafts. In particular, said rack is engaged with said steering axle shafts.

**.** An example of embodiment of a steering unit is disclosed in document GB2397861, by the same Applicant.

. One of the most felt problems in the field of steering units is the transmission of the vibrations from the rack wheels and hence, to the steering column and thus to the driver. Such vibrations cause a noise often perceived by the driver as a fault.

. Today's trend in the field of steering units is to attenuate as much as possible the driver's perception of such vibrations, thus obtaining a vehicle provided with higher driving comfort.

. The steering unit manufactured according to the present invention contributes to greatly decreasing the vibrations acting on the rack and the driver's perception of such vibrations.

. Such steering unit is manufactured according to the following claim 1. The dependent claims describe embodiment variations.

. The features and advantages of the steering unit according to the present invention will appear more clearly from the following description of an embodiment, made by way of an indicative non-limiting example with reference to the annexed drawings, wherein:

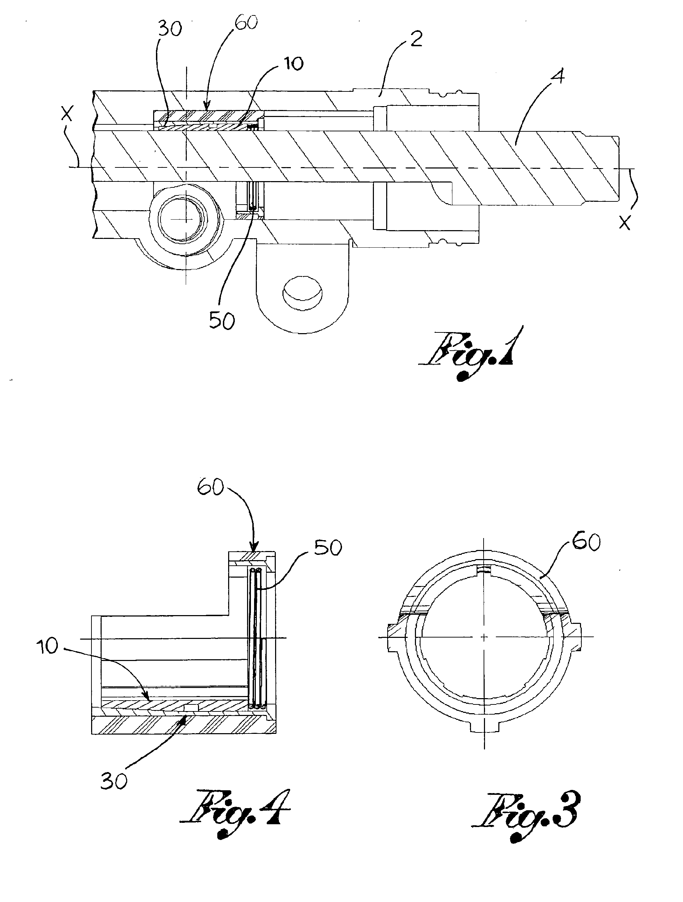

. - figure 1 shows a schematic, partial section view of a portion of a steering unit according to the present invention, comprising support means of the rack, in accordance with a first embodiment;

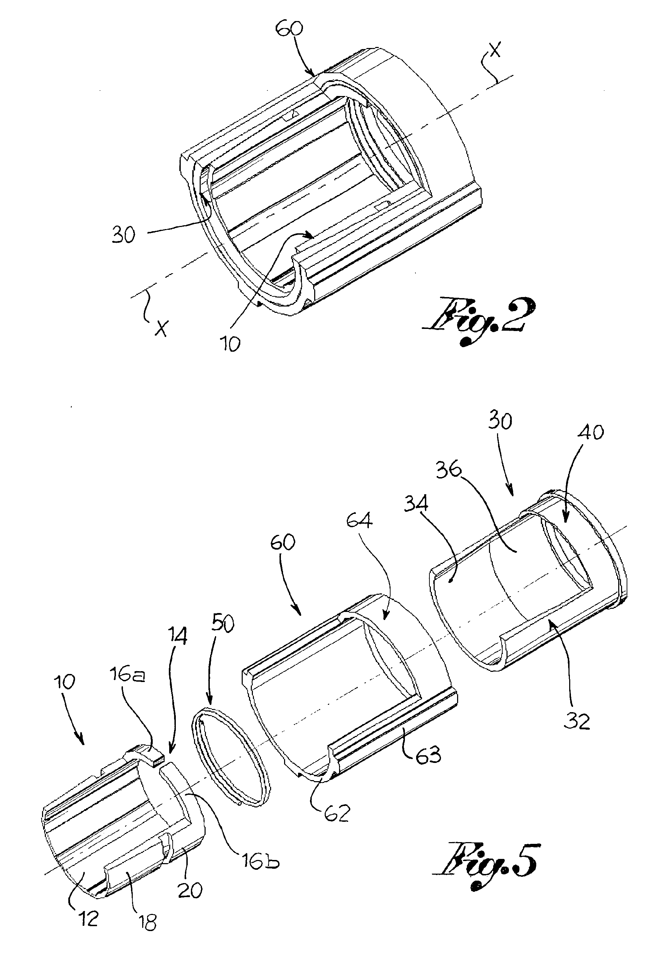

. - figure 2 shows a perspective view of the support means of the rack of figure 1;

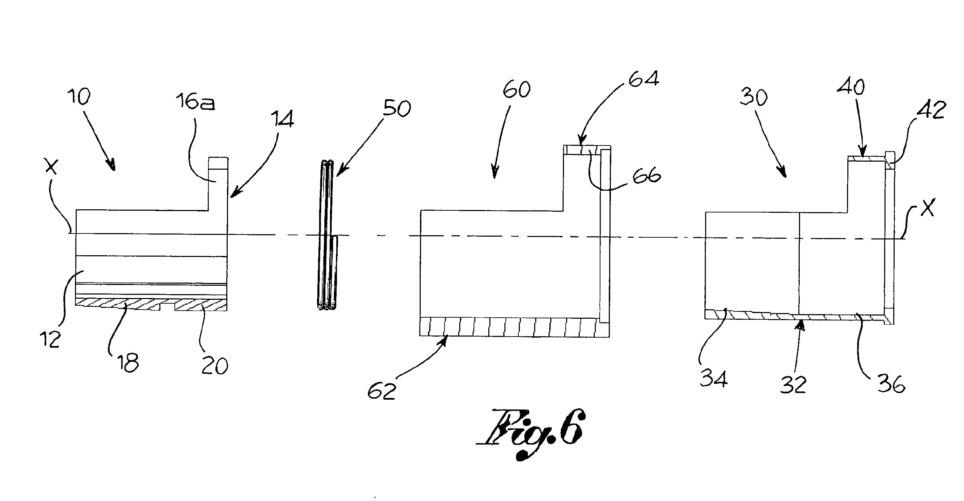

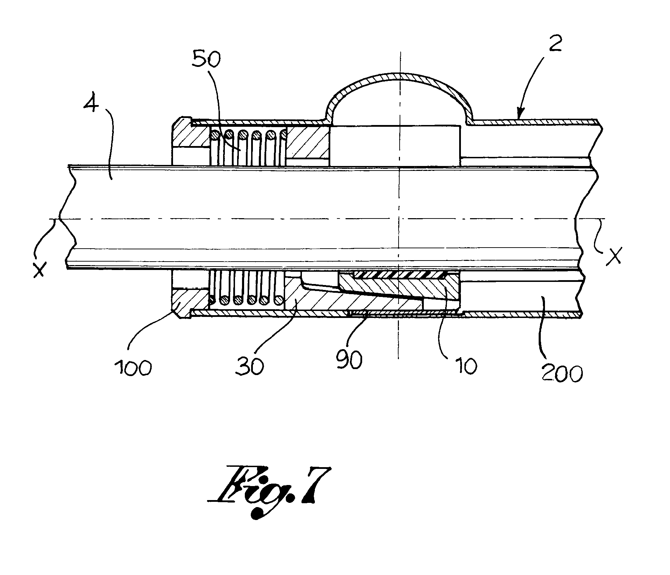

. - figures 3 and 4 respectively show a front and side section view of the support means of figure 2;

. - figure 5 shows a perspective exploded view of the support means of figure 2;

. - figure 6 shows a side section view of the support means of figure 5; and

. - figure 7 shows a schematic, partial section view of a portion of a steering unit according to the present invention, comprising support means of the rack, in accordance with a further embodiment.

. According to figures 1 to 6, a steering unit is described hereinafter, comprising a steering box 2 suitable for being connected to a frame of a vehicle.

. The steering box 2 extends along a longitudinal axis X-X. With reference to the direction of the longitudinal axis X-X, in the description below reference shall be made to the radial and circumferential directions associated thereto.

. The steering unit further comprises a pinion, suitable for being connected, at a first end, to a steering column. Said steering column is intended to be connected to a steering wheel of the motor vehicle.

. The steering unit further comprises a rack 4. The steering box 2 is suitable for seating at least partly said rack 4 which, seated in said box, extends along said longitudinal axis X-X.

. Rack 4 comprises, preferably at the ends thereof, connecting portions suitable for being connected to steering axle shafts of the motor vehicle.

. The steering unit 1 further comprises support means, suitable for being seated into said steering box 2 and suitable for slidingly supporting said rack 4.

. Said support means comprise a bush 10 seated into said steering box 2.

. Preferably, said bush 10 is longitudinally drilled, so that said bush can be fitted on said rack.

. Bush 10 extends along said longitudinal axis X-X and comprises a support wall 12 having a predetermined circumferential angular extension, preferably smaller than a round angle.

. In other words, said support wall 12 exhibits such a slot as to form an aperture that allows the engagement of a portion of the rack with the pinion.

. Bush 10 further comprises a support wall 14, preferably projecting circumferentially from said support wall 12.

. According to a preferred embodiment, said support wall 14 comprise two wings 16a, 16b circumferentially projecting from support wall 12, at an end thereof, converging arc-wise with one another.

. In other words, also said support wall exhibits a longitudinal slot.

. Support wall 12 exhibits a substantially cylindrical inner surface facing the rack.

. The inner surface of the support wall 12 of the bush, according to a preferred embodiment, directly contacts the rack.

**.** In an embodiment variation, said support means comprise a friction element, seated inside the bush, on the inner surface thereof, intended to be placed in abutment with the rack.

. Moreover, support wall 12 exhibits an at least partly truncated-cone outer surface.

**.** According to a preferred embodiment, said outer surface of support wall 12 exhibits a truncated-cone portion 18 and a cylindrical portion 20, jointed to said truncated-cone portion 18.

. It should be noted that said cylindrical portion 20 of the outer surface of support wall 12 is arranged on the side of support wall 14, projecting from said support wall 12.

. Moreover, said support means of the rack comprise an enclosure 30 suitable for seating said bush 10 therein.

**.** Said enclosure 30 comprises a seating wall 32 having such longitudinal and circumferential extension as to seat said support wall 12 of bush 10 therein.

. Preferably, said seating wall 32 exhibits an aperture, at the aperture present on the bush, such as to allow the engagement between a portion of the rack, which crosses said rack from the inside thereof, and the pinion.

**.** The seating wall 32 exhibits an inner surface, intended to directly contact the bush, having a configuration complementary to that of the outer surface of the bush.

**.** In other words, the inner surface of enclosure 30 exhibits a truncated-cone portion 34 and a cylindrical portion 36, jointed to said truncated-cone portion 34.

. When the bush is inserted in the enclosure, the bush is suitable for sliding inside the enclosure, so that the truncated-cone portion 18 of bush 10 slides on the truncated-cone portion 34 of enclosure 30 and the cylindrical portion 20 of bush 10 slides on the cylindrical portion 36 of enclosure 30.

. Said enclosure 30 further exhibits a substantially cylindrical outer surface.

. Moreover, enclosure 30 comprises an active wall 40, preferably ring shaped, arranged at the end of the seating wall 32 of said enclosure.

. Said active wall 40 is suitable for seating said support wall 14 of bush 10.

. Moreover, active wall 40 comprises an inner annular projection 42 suitable for forming an abutment for said support wall 14 of bush 10.

. Moreover, said support means comprise longitudinal thrust means, suitable for constantly influencing said bush and/or said enclosure acting thereon according to a substantially longitudinal direction.

. Preferably, said thrust means comprise a spring 50, for example helix shaped.

. In assembling the steering unit, spring 50 is inserted into enclosure 30, in abutment with the annular projection 42 of said active wall 40 of enclosure 30. Bush 10 is then seated into enclosure 30, so that the support wall 14 of said bush 10 is at least partly seated into said active wall 40 of enclosure 40. The spring is then confined between the support wall 14 of bush 10 and the annular projection 42 of the active wall 40 of enclosure 30.

. By virtue of the complementary coupling between the outer surface of bush 10 and the inner surface of enclosure 30, while spring 50 pushes said bush, at the same time it tends to make it perform a radial movement that moves said bush in abutment against the rack and the latter to firmly engage with the pinion.

. Moreover, said support means comprise a containment band 60 suitable for seating said enclosure 30 and intended for being placed in contact with the inner surface of the steering box 2 of the steering unit.

. The containment band 60 is suitable for influencing with a substantially radial action said enclosure 30, ensuring minimal radial clearance between bush 10 and said enclosure 30 engaged with rack 4 and steering box 2.

. Preferably, said containment band 60 is made of a deformable elastic material.

. Containment band 60 comprises an enclosing wall 62, having such longitudinal and circumferential extension as to internally seat the seating wall 32 of enclosure 30.

. The enclosing wall 62 exhibits such aperture as to allow the engagement of the rack, which passes inside said containment band 60, with the pinion.

. Said enclosing wall 62 comprises at least one longitudinal rib 63, protruding from said enclosing wall 62 and arranged outside thereof.

. Preferably, three longitudinal ribs, angularly equally spaced, are provided.

. Said longitudinal ribs are intended for being seated into respective grooves obtained into the steering box for constraining the containment band to said steering box.

. Said ribs are a preferred embodiment of constraining means suitable for steadily constraining said containment band 60 inside the steering box.

. Containment band 60 further comprises a containment ring 64, at an end of said enclosing wall 62, said ring being suitable for seating said active wall 40 of enclosure 30.

. Containment ring 64 internally exhibits an annular projection 66, suitable for engaging with the active wall 40 of enclosure 30 for constraining it, at least unilaterally, to the longitudinal movement.

. As it can be noted, according to the embodiment described above, containment band 60, enclosure 30, spring 50 and bush 10 form an assembly separable from the steering box.

. In the normal operation of the steering unit described above, spring 50 exerts a longitudinal thrust on spring 50, so that said bush is pushed longitudinally and, by the effect of the coupling between the truncated-cone portions, its inner surface is pushed towards the rack. The rack is then pushed towards the pinion, steadily engaging therewith.

. Moreover, when due to holes, cat's backs or steps, the wheels undergo a sudden blow and the blow is transmitted from the pinion to the rack, the latter pushes the bush towards the enclosure.

**.** The enclosure, by virtue of the coupling between the truncated-cone surfaces, tends to draw out from below the bush, but the installation between bush and enclosure causes a compression of the spring that generates an elastic and soft contrast to said sudden action.

. The steering unit according to the present invention is particularly suitable for preventing the transmission of vibrations from the pinion-rack system to the steering wheel.

. Advantageously, moreover, it ensures an extended support of the rack in the portion thereof instantly engaged with the pinion.

**.** According to an even further advantageous aspect thereof, said support means can be mounted inside the steering box, absorbing dimensional variations thereof due to the normal manufacture tolerances.

. It is clear that a man skilled in the art can make several changes to the steering unit described above in order to meet specific and incidental needs, all falling within the scope of protection defined in the following claims.

**.** Below, for example, is a description of a further variation of embodiment wherein the support means are integrated to the steering box (figure 7).

**.** According to said variation, the support means comprise bush 10 and enclosure 30, connected to each other through truncated-cone surfaces reciprocally sliding.

. Enclosure 30 exhibits an outer surface directly contacting the inner surface of steering box 2.

. The support means further comprise spring 50 and a cover 100, connected to an end of the steering box 2, through which rack 4 passes.

. Spring 50 is confined between cover 100 and enclosure 30, performing a longitudinal action thereon.

. Said support means further comprise at least one fixed abutment 200, internally projecting from steering box 2.

. Bush 10 is placed in abutment of said fixed abutments 200.

. Moreover, said support means comprise an elastic band 90, in contact with the steering box 2, on which enclosure 30 slides, suitable for performing a radial action on said enclosure.

. It is clear that also such variation of embodiment falls within the scope of protection as defined by the following claims.

## Claims

1. A steering unit for a vehicle, comprising:
- a steering box (2) suitable for being associated to a frame of said vehicle, wherein said box (2) comprises an outer annular wall having prevailing extension along a longitudinal axis (X-X);
- a rack (4), seated into said steering box (2), and associable to steering axle shafts of said motor vehicle;
- a pinion, engaged with said rack (4) and associable to a steering column of said motor vehicle;
- support means, suitable for being seated into said steering box (2) and suitable for slidingly supporting said rack (4) in said steering box;
said steering unit being **characterised in that** said support means comprise a bush (10), suitable for being moved in abutment with said rack (4) for supporting said rack, and an enclosure (30), constantly longitudinally influenced and sliding along said longitudinal axis for engaging said bush (10) and pushing said bush towards said rack.

2. A unit according to claim 1, wherein said bush (10) exhibits an outer surface having at least one truncated-cone portion, slidingly coupled, by a shape coupling, to said enclosure (30).

3. A unit according to claim 1 or 2, further comprising thrust means suitable for constantly longitudinally influencing said bush.

4. A unit according to claim 3, wherein said thrust means comprise a spring (50).

5. A unit according to claim 3 or 4, wherein said enclosure comprises an annular projection (42) and said bush (10) comprises a support wall (14) and wherein said thrust means are influenced in compression between said annular projection (42) and said support wall (14).

6. A unit according to claim 5, wherein a reciprocal sliding between bush and enclosure, in the direction that moves the inner surface of the bush away from the rack, causes a compression of said thrust means.

7. A unit according to any one of the previous claims, further comprising a containment band (60) suitable for seating said enclosure (30).

8. A unit according to claim 7, further comprising constraining means suitable for constraining, at least unilaterally, said enclosure (30) to said containment means (60).

9. A unit according to claim 7 or 8, wherein said containment band (60) comprises at least one outer longitudinal rib (63) intended for coupling said containment band (60) with the steering box (2).

10. A unit according to any one of claims 7 to 9, wherein said containment band (60) is made of an elastically deformable material.

11. A unit according to any one of claims 7 to 10, further comprising thrust means suitable for constantly influencing said bush, wherein said containment band (60), said enclosure (30), said bush and said thrust means together form an assembly separable from said steering box.

12. A steering unit according to any one of the previous claims, wherein said bush comprises a support wall (12) having an aperture and a support wall (14) comprising separate wings (16a, 16b) projecting arc-wise from an end of said support wall (12).

13. A steering unit according to any one of the previous claims, wherein said enclosure (30) comprises a seating wall (32) having an aperture and an active ring-shaped wall (40) arranged at an end of said seating wall (32).

14. A steering unit according to any one of claims 7 to 13, wherein said containment band (60) comprises an enclosing wall (62), provided with an aperture, and a containment ring (64).
